(19) Europäisches Patentamt

European Patent Office

Office européen des brevets

(11) Veröffentlichungsnummer: **0 563 573 A1**

# (12) EUROPÄISCHE PATENTANMELDUNG

(21) Anmeldenummer: **93102939.1**

(22) Anmeldetag: **25.02.93**

(51) Int. Cl.⁵: **C08G 63/48**, C09D 11/10

(30) Priorität: **04.03.92 DE 4206698**

(43) Veröffentlichungstag der Anmeldung:
**06.10.93 Patentblatt 93/40**

(84) Benannte Vertragsstaaten:
**AT BE DE FR GB IT NL SE**

(71) Anmelder: **HOECHST AKTIENGESELLSCHAFT**

**D-65926 Frankfurt(DE)**

(72) Erfinder: **Bender, Albert, Dr.**
**Henry-Moisand-Strasse 16**
**W-6500 Mainz(DE)**
Erfinder: **Bothe, Lothar, Dr.**
**Kurt-Schumacher-Strasse 69 e**
**W-6500 Mainz(DE)**
Erfinder: **Werner, Gerhard, Dr.**
**Zum Talblick 50**
**W-6246 Glashütten 1(DE)**

(54) **Cyclopentadien-modifizierte Alkydharze.**

㊐ Cyclopentadien-modifizierte Alkydharze erhalten durch Umsetzung von natürlichen, ungesättigten Fettsäureestern mit Cyclopentadien-Verbindungen unter Druck, Umesterung der gebildeten Addukte mit Polyolen, die mindestens drei Hydroxylgruppen enthalten und Veresterung mit aromatischen oder cycloaliphatischen Polycarbonsäuren oder deren Anhydriden. Diese Harze werden eingesetzt bei der Herstellung von Druckfarben für den Offsetdruck. Die neuen Harze verleihen diesen Druckfarben einen verbesserten Glanz.

Gegenstand der Erfindung sind neue, mit Dicyclopentadien modifizierte Alkydharze, die vorteilhaft in Offsetdruckfarben verwendet werden können. Die neuen Harze erzeugen in Offsetdruckfarben eine gesteigerte Glanzentwicklung.

Farben für den Offsetdruck enthalten gewöhnlich Alkydharze. Diese haben zum einen die Aufgabe, für eine Verträglichkeit zwischen den der Farbe zugrundeliegenden Harzen und den Mineralölen zu sorgen. Zum anderen besitzen sie jedoch auch Bindemitteleigenschaften, d.h. sie sollen eine gute Pigmentbenetzung und Filmbildung ermöglichen, die dem Druck eine gute Scheuerfestigkeit verleiht. Neben dieser Schutzfunktion ist es jedoch ihre besondere Aufgabe, dem Farbfilm einen hohen Glanz zu geben. Dieser ist bei einem optisch ansprechenden Druckerzeugnis besonders erwünscht.

Für diesen Einsatzzweck werden gewöhnlich Alkydharze verwendet, die hergestellt werden aus Estern vegetabiler Fettsäuren, deren freie Hydroxylgruppen mit mehrwertigen Carbonsäuren weiterverestert werden. Mit diesen Systemen ist ein Glanzniveau erreicht, das sich auf dieser Basis nicht mehr steigern läßt, ohne Einbußen z.B. bei der Trocknung oder der Scheuerfestigkeit hinzunehmen.

Es ist Aufgabe der vorliegenden Erfindung, neue Systeme zu entwickeln, mit denen sich der Glanz bei Beibehaltung der überlegenen Eigenschaften weiter steigern läßt.

Diese Aufgabe konnte in unerwarteter Weise gelöst werden durch Bereitstellung von Alkydharzen mit Cyclopentadien-Einheiten, die hergestellt werden durch Umsetzung von vegetabilen Ölen (I) mit Cyclopentadien-Verbindungen (II), Umesterung der gebildeten Addukte mit Polyolen (III) und Veresterung freier Hydroxylgruppen mit Polycarbonsäuren oder deren Anhydriden (IV).

In der Literatur wurde bereits über die Addition von Cyclopentadien an natürliche Öle oder deren Fettsäuren und deren Weiterverarbeitung zu fettsäurehaltigen Polyesterharzen berichtet [Fette-Seifen-Anstrichmittel, Bd. 66(1964), S. 670]. Diese Produkte sind jedoch anders als die der vorliegenden Erfindung aufgebaut und für den Einsatz in Druckfarben nicht geeignet. Gleiches gilt auch für lufttrocknende, fettsäuremodifizierte Alkydharze für Anstrichzwecke, wie sie z.B. beschrieben sind in der deutschen Patentanmeldung P 24 41 922. Diese Alkydharze sind aus ungesättigten Dicarbonsäuren, gegebenenfalls aromatischen oder cyclischen Polycarbonsäuren, mindestens dreiwertigen Alkoholen, natürlichen ungesättigten Fettsäureestern und Dicyclopentadien aufgebaut. Damit enthalten diese Harze weitgehend die gleichen Bausteine wie die im folgenden beschriebenen, erfindungsgemäßen Harze. In beiden Fällen werden allerdings die Ausgangsverbindungen in einer gänzlich unterschiedlichen Reihenfolge miteinander umgesetzt, so daß dann Harze mit völlig anderen Eigenschaften erhalten werden.

Gegenstand der Erfindung sind neue Cyclopentadien-modifizierte Alkydharze, die erhalten werden durch Umsetzung von natürlichen, ungesättigten Fettsäureestern (I) mit Cyclopentadien-Verbindungen (II) unter Druck, Umesterung der gebildeten Addukte mit Polyolen (III), die mindestens drei Hydroxylgruppen enthalten und Veresterung mit aromatischen oder cycloaliphatischen Polycarbonsäuren oder deren Anhydriden (IV).

In der ersten Reaktionsstufe können als Komponente I alle natürlichen ungesättigten Fettsäureester verwendet werden. Als Beispiele sind genannt Sojaöl, Leinöl, Cottonöl, Tabaksamenöl, Fischöl, dehydratisiertes Rizinusöl, Saffloröl, Sonnenblumenöl, Mohnöl, Tallöl und Holzöl. Die Öle können für sich allein oder als Gemische eingesetzt werden.

Unter Cyclopentadienverbindungen II, die Flüssigkeiten darstellen, sind Cylopentadien, dessen Oligomere, wie durch Diels-Alder-Addition erhältliche Di-, Tri- und Tetramere sowie die Alkylderivate oder Cooligomere dieser Verbindungen, z.B. Methylcyclopentadien, Cyclopentadien-Isopren-Dimere, Cyclopentadien-Piperylen-Dimere zu verstehen. Die betreffenden Ausgangssubstanzen brauchen keinen hohen Reinheitsgrad aufzuweisen. Es können beispielsweise Fraktionen, insbesondere konzentrierte Fraktionen, verwendet werden, die beim thermischen Dimerisieren einer C5-Fraktion entstehen, wobei diese C5-Fraktion als Nebenprodukt bei der thermischen Zersetzung von Naphta und entsprechenden Erdölfraktionen anfällt. Bei einer solchen Dimerisierung wird das in einer solchen Fraktion enthaltene Cyclopentadien bzw. Methylcyclopentadien in Dicyclopentadien, Dimethyldicyclopentadien, ein Dimeres aus Cyclopentadien und Methylcyclopentadien, ein Dimeres aus Cyclopentadien und Isopren, eine Dimeres aus Cyclopentadien-Piperylen und andere entsprechende dimere Substanzen umgewandelt.

In diesen Fraktionen können noch weitere ungesättigte Monomere, wie z.B. Propylen, Buten, Butadien, Penten, Cyclopenten oder Cyclohexen enthalten sein.

Auch können sogenannte C9-Fraktionen, die als Nebenprodukt bei der Crackung von Naphtha und dgl. entstehen, enthalten sein. Diese bestehen dann beispielsweise aus Styrol, alpha-Methylstyrol, Vinyltoluol, Inden, Methylinden oder Mischungen davon.

Demzufolge ist eine höhere Reinheit der Komponente II nicht immer erforderlich, es ist jedoch bevorzugt, daß Cyclopentadieneinheiten in einer Menge von 70 Gew.-% oder mehr vorliegen.

2

Die Copolymerisation von I mit II, die in Gegenwart von Katalysatoren oder vorzugsweise ohne Katalysatoren, d.h. rein thermisch durchgeführt wird, kann vorzugsweise in Substanz, aber auch in Gegenwart von inerten Lösungsmitteln erfolgen. Es eignen sich hierzu beispielsweise aromatische Kohlenwasserstoffe, wie Benzol, Toluol, Xylole und Tetrahydronaphthalin, aliphatische Kohlenwasserstoffe, wie Isooctan, Testbenzin sowie Gemische aus alkylierten Benzolen mit einem Siedebereich von 100 bis 200 °C. Geeignete Katalysatoren für die radikalsche Polymerisation, die weniger bevorzugt ist, sind z.B. Peroxide, wie Di-tert.-Butylperoxid, Benzoylperoxid, tert.-Butyl-hydroperoxid, Cumolhydroperoxid oder dergleichen. Wegen der hohen Reaktionstemperatur wird das Verfahren unter erhöhtem Druck durchgeführt. Dieser beträgt vorzugsweise bis zu 10 bar. Wegen der Oxidationsempfindlichkeit der Reaktionsprodukte ist es außerdem von Vorteil, in der Atmosphäre eines unter den Reaktionsbedingungen inerten Gases, wie Stickstoff oder Kohlendioxyd zu arbeiten.

Die Umsetzung der Komponenten I und II erfolgt bei erhöhter Temperatur von 200 bis 300 °C, vorzugsweise zwischen 230 und 270 °C, wobei der Gewichtsanteil der Komponente II zwischen 5 und 95 %, vorzugsweise zwischen 10 und 50%, bezogen auf diese Reaktionsmischung beträgt. Ganz besonders bevorzugt sind Gewichtsanteile zwischen 15 und 30 %.

Die erste Stufe des Verfahrens läßt sich in unterschiedlicher Weise durchführen. Bei kleineren Ansätzen ist es möglich, die Komponenten I und II gemeinsam vorzulegen und anschließend auf die gewünschte Temperatur zu erhitzen. Bei größeren Ansätzen empfiehlt es sich jedoch wegen der auftretenden Reaktionswärme den Fettsäureester I vorzulegen, auf Reaktionstemperatur zu erhitzen und anschließend die Cyclopentadien-Verbindungen II zuzudosieren. Es ist jedoch auch möglich, Lösungsmittel zu erhitzen und dann I und II, getrennt oder als Mischung, mit oder ohne Lösungsmittel, zuzudosieren. Nach Reaktionsende können die erhaltenen Copolymerisate durch Abdestillieren von Lösungsmittel und nicht umgesetzten Monomeren als Flüssigkeiten isoliert werden. Einfacher ist es jedoch, die durch Umsetzung von I mit II erhaltenen Copolymerisate ohne vorherige Isolierung mit den Polyolen III umzusetzen. Diese Ausführungsform ist deshalb bevorzugt.

In der zweiten Reaktionsstufe kommen als Polyole III alle mindestens dreiwertigen Alkohole, die üblicherweise zur Herstellung von Alkydharzen verwendet werden, infrage, also z.B. Glycerin, Trimethylolethan, Trimethylolpropan, Di-Trimethylolpropan, Pentaerythrit, Di-Pentaerythrit und Sorbit, jeweils für sich allein oder im Gemisch. Gegebenenfalls können auch Gemische mit Diolen eingesetzt werden, z.B. Ethylenglykol, Propylenglykol, Butylenglykol-1,3, Diethylenglykol oder Neopentylglykol.

Die Umesterungsreaktion wird so durchgeführt, daß die in der ersten Reaktionsstufe gebildeten Addukte mit den Polyolen in Substanz auf die gewünschte Temperatur erhitzt werden. Es ist natürlich auch möglich, dem Ansatz Lösungsmittel beizufügen. Infrage kommen die oben erwähnten. Diese Umesterung erfolgt gleichfalls bei erhöhter Temperatur zwischen 100 und 270 °C, vorzugsweise zwischen 200 und 260 °C, wobei der Gewichtsanteil der Komponente III bezogen auf das Umsetzungsprodukt von I mit II zwischen 1 und 30 %, vorzugsweise zwischen 5 und 20 % beträgt.

Die Umesterung ist nach spätestens 5 Stunden abgeschlossen. Sie kann durch die üblichen Umesterungskatalysatoren wie z.B. Triphenylphosphit, bicyclische Phosphite, organische Zinnverbindungen wie Dibutylzinnoxid, Metallsalze, -oxide und -hydroxide wie Calciumacetat, Bleioxid oder Lithiumhydroxid beschleunigt werden. Diese Katalysatoren werden üblicherweise in einer Menge bis zu 0,2 Gew.-% des Gesamtansatzes eingesetzt.

In der dritten Reaktionsstufe erfolgt die Reaktion mit aromatischen oder cycloaliphatischen Polycarbonsäuren, oder deren Anhydriden IV, oder mit Mischungen davon. Infrage kommen hier vorzugsweise ortho-Phthalsäure-, Tetrahydrophthalsäure-,Trimellithsäure-, Pyromellithsäure-, Endomethylentetrahydrophthalsäureanhydrid, Isophthalsäure und Terephthalsäure zum Einsatz. Die Verwendung der aromatischen Dicarbonsäuren bzw. deren Anhydride ist bevorzugt. Es können auch untergeordnete Mengen aromatischer Monocarbonsäuren, wie Benzoesäure oder p-tert.-Butylbenzoesäure, mitverwendet werden. Deren Mengen betragen dann aber höchstens 20 Gew.-% bezogen auf die Komponente IV.

Diese Veresterung mit Polycarbonsäuren oder deren Anhydriden IV erfolgt bei erhöhter Temperatur zwischen 100 und 270 °C, vorzugsweise zwischen 120 und 260 °C, wobei der Gewichtsanteil der Komponente IV bezogen auf den hydroxylgruppenhaltigen Fettsäureester zwischen 1 und 50 %, vorzugsweise zwischen 5 und 30 % beträgt. Das bei der Veresterung der hydroxylgruppenhaltigen Fettsäureester mit den Komponenten IV zu den erfindungsgemäßen Alkydharzen entstehende Reaktionswasser kann mit Hilfe von Schleppmitteln, wie Xylol oder Testbenzin, entfernt werden. Zweckmäßigerweise wird dieses jedoch nach Beendigung der Reaktion abdestilliert, da es die Eigenschaften des Alkydharzes stören kann. Der Fortgang der Reaktion kann bequem durch Bestimmung charakteristischer Kennzahlen, wie z.B. Säurezahl oder Viskosität, verfolgt und bei den gewünschten Werten beendet werden.

Die erfindungsgemäß hergestellten Alkydharze besitzen eine Konsistenz, die von flüssig bis pastenförmig reicht. Dies entspricht einem Viskositätsbereich von ca. 5 bis 500 Pa*s/23 °C. Die Viskosität der Produkte kann gegebenenfalls auch ober- oder unterhalb des angegebenen Bereichs liegen, doch ist dieser wegen der Brauchbarkeit der Produkte als Druckfarbenbindemittel besonders interessant. Besonders günstig verhalten sich die Produkte, wenn ihre Säurezahl unter 30 mg KOH/g Harz liegt. Bevorzugt sind jedoch Produkte mit einer Säurezahl unterhalb von 20, ganz besonders bevorzugt sind solche mit einer Säurezahl unterhalb von 10 mg KOH/g Harz. Diese Bereiche können auch durch die mengenmäßigen Gewichtsverhältnisse bzw. Molverhältnisse der einzelnen Komponenten zueinander in weitem Umfang variiert werden. Die Produkte sind sehr lagerstabil, neigen also nicht zur Hautbildung. Gegebenenfalls können jedoch die üblichen Stabilisatoren, wie Hydrochinon, zugesetzt werden. Die Mengen liegen dabei bis zu 0,5 Gew.-% bezogen auf den Gesamtansatz.

Die Molekulargewichte der erfindungsgemäßen Harze können durch Gelpermeationschromatographie der Harzlösungen in Tetrahydrofuran an Polystyrolschaum in einem Permeationsmeßgerät nach bekannten Methoden ermittelt werden. Das Molekuklargewicht (Gewichtsmittel $M_w$) der erfindungsgemäßen Harze liegt gemäß den erhaltenen Meßwerten vorzugsweise bei Werten von $M_w > 1000$ und ist nach oben nicht kritisch begrenzt. Besonders bevorzugt liegen die Molekulargewichte $M_w$ jedoch in einem mittleren Bereich zwischen 3000 und 30000, insbesondere 4000 bis 20000.

Die erfindungsgemäß hergestellten Produkte können leicht in Lösungsmitteln gelöst werden, die üblicherweise zur Herstellung von Farben für den Offsetdruck verwendet werden, also z.B. in hochsiedendem Mineralöl mit dem Siedebereich 260 bis 290 °C. Solche Harzlösungen zeigen eine ausgezeichnete Pigmentbenetzung, wobei daraus hergestellte Druckfarben rasch trocknende Druckfilme mit guter Scheuerfestigkeit und hohem Glanz ergeben.

Die nachfolgenden Beispiele dienen zur Erläuterung der Erfindung, ohne diese jedoch einzuschränken.

**Beispiel 1**

Herstellung eines Alkydharzes, das mit Dicyclopentadien und Sojaöl modifiziert ist.

608 g Sojaöl werden in einem 3 ltr. Druckbehälter auf 260 °C erhitzt. Dazu werden innerhalb 1 h 192 g 75 proz. Dicyclopentadien zudosiert. Nach 5 h ist der anfangs bei 5 bar liegende Druck auf 1 bar abgesunken. Dann wird auf 240 °C abgekühlt und 60 g Trimethylolpropan und 1 g Triphenylphosphit zugegeben. Nach 2 h werden vorsichtig 110 g Isophthalsäure zugegeben und das entstehende Reaktionswasser azeotrop mit Xylol abdestilliert. Sobald eine Säurezahl von 10 mg KOH/g Harz erreicht ist, wird das Xylol bei 60 mbar während 15 min im Vakuum abdestilliert. Es werden 912 g Alkydharz erhalten, das eine Viskosität von 150 dPa*s/23 °C, eine Säurezahl von 8 mg KOH/g Harz und ein Molekulargewicht $M_w$ von 5630 besitzt.

**Beispiel 2**

Herstellung eines Alkydharzes, das mit Dicyclopentadien, Sojaöl und Leinöl modifiziert ist.

1710 g Leinöl und 570 g Sojaöl werden in einem 5 ltr. Druckbehälter auf 260 °C erhitzt. Dazu werden innerhalb 1 h 720 g 75 proz. Dicyclopentadien zudosiert. Nach 5 h ist der anfangs auf 4 bar angestiegene Druck auf 0,5 bar abgesunken. Dann wird auf 240 °C abgekühlt und 236 g Trimethylolpropan und 3 g Lithiumhydroxid zugegeben. Nach 2 h werden vorsichtig 423 g Isophthalsäure zugegeben und das entstehende Reaktionswasser azeotrop mit Xylol abdestilliert. Sobald die Säurezahl unter 16 mg KOH/g Harz gefallen ist, wird das Xylol bei 60 mbar während 15 min im Vakuum abdestilliert. Dann werden noch 1,5 g Hydrochinon eingerührt. Es werden 3660 g Alkydharz erhalten, das eine Viskosität von 1400 dPa*s/23 °C, eine Säurezahl von 9 mg KOH/g Harz und ein Molekulargewicht $M_w$ von 16600 besitzt.

Vom Produkt des Beispiels 2 und einem handeslüblichen Alkydharz, das aus Leinöl, Trimethylolpropan und Isophthalsäure hergestellt wird (Säurezahl 8 mg KOH/g Harz; Viskosität 1100 dPa*s) wurden nach der folgenden Rezeptur Druckfarben hergestellt und anwendungstechnisch geprüft.

Es wird ein Einsatzfirnis hergestellt, der 25 Gew.-% Alkydharz, 25 Gew.-% eines handelsüblichen phenolharzmodifizierten Kolofoniumharzes und 50 Gew.-% hochsiedendes Mineralöl mit dem Siedebereich 260 bis 290 °C enthält.

Daraus werden mit Litholrubin durch Dispergieren am Dreiwalzenstuhl Druckfarben hergestellt, die 84 Gew.-% Firnis und 16 Gew.-% Pigment enthalten.

Diese wurden auf dem Probedruckgerät der Fa. Prüfbau auf gestrichenem Papier angedruckt und Probedrucke mit der gleichen übertragenen Farbmenge ausgewertet. Bestimmt wurden die Zügigkeit der Farben, Glanz und Farbdichte der Druckfilme sowie deren Wegschlagverhalten und Scheuerbeständigkeit.

Die Ergebnisse der Prüfungen dieser Druckfarben sind der Tabelle zu entneh - men. Darin bedeuten:

Zügigkeit    (Maß für die Farbübertragung)
         gemessen mit dem Inkomat der Fa. Prüfbau
Glanz, Farbdichte  gemessen mit dem Laborreflektometer nach Lange Einstrahlwinkel 60 °
Wegschlagen   (Maß für die Trocknung)

die Beurteilung erfolgt mit Hilfe des Probedruckgerätes, wobei unmittelbar nach dem Andruck dieser mit unbedrucktem Papier gekontert wird. Je weniger Farbe durch die Konterung übertragen wird, desto besser ist die Trocknung. Die Auswertung erfolgt visuell.

Scheuertest

Mechanische Beanspruchung des Druckfilms durch eine rotierende Bürste; visuelle Auswertung

| Harz aus | Beispiel 2 | Handelsübliches Alkydharz |
|---|---|---|
| Viskosität Einsatzfirnis [Pa*s/23°C] | 4,2 | 4,9 |
| Viskosität Druckfarbe [Pa*s/23°C] | 16,8 | 19,9 |
| Zügigkeit | 7,4 | 7,1 |
| Glanz [%] | 89,3 | 76,0 |
| Farbdichte | 2,3 | 2,2 |
| Wegschlagen | kein Unterschied | |
| Scheuerfestigkeit | kein Unterschied | |

**Patentansprüche**

1. Cyclopentadien-modifizierte Alkydharze erhalten durch Umsetzung von natürlichen, ungesättigten Fettsäureestern mit Cyclopentadien-Verbindungen unter Druck, Umesterung der gebildeten Addukte mit Polyolen, die mindestens drei Hydroxylgruppen enthalten und Veresterung mit aromatischen oder cycloaliphatischen Polycarbonsäuren oder deren Anhydriden.

2. Cyclopentadien-modifizierte Alkydharze nach Anspruch 1, dadurch gekennzeichnet, daß sie erhalten werden durch Umsetzung der Fettsäureester und Cyclopentadien-Verbindungen bei einem Druck bis zu 10 bar.

3. Cyclopentadien-modifizierte Alkydharze nach Anspruch 1, dadurch gekennzeichnet, daß sie erhalten werden aus Sojaöl, Leinöl, Cottonöl, Tabaksamenöl, Fischöl, dehydratisiertem Rizinusöl, Saffloröl, Sonnenblumenöl, Mohnöl, Tallöl oder Holzöl.

4. Cyclopentadien-modifizierte Alkydharze nach Anspruch 1, dadurch gekennzeichnet, daß sie erhalten werden aus Glycerin, Trimethylolethan, Trimethylolpropan, Di-Trimethyolopropan, Pentaerythrit, Di-Pentaerythrit oder Sorbit, jeweils für sich allein oder im Gemisch.

5. Cyclopentadien-modifizierte Alkydharze nach Anspruch 1, dadurch gekennzeichnet, daß sie erhalten werden aus ortho-Phthalsäure-, Tetrahydrophthalsäure-, Trimellithsäure-, Pyromellithsäure-, Endomethylentetrahydrophthalsäureanhydrid, Isophthalsäure, Terephthalsäure oder deren Anhydriden.

6. Verwendung der Cyclopentadien-modifizierten Alkydharze nach Anspruch 1 für die Zubereitung von Offsetdruckfarben.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 042 515 (MICHAEL HÜBNER MÜNCHEN GMBH) <br> * Seite 5, Zeile 19; Anspruch 1; Beispiel 1a * <br> --- | 1,2,6 | C08G63/48 <br> C09D11/10 |
| Y | CHEMICAL ABSTRACTS, vol. 92, no. 20, 19. Mai 1980, Columbus, Ohio, US; abstract no. 164346t, KOSTENKO,S.I. ET AL. 'Study of the reaction of dicyclopentadiene...' <br> * Zusammenfassung * <br> & IZV. VYSS. UCHEBN. ZAVED.,KHIM.KHIM.TECHNOL. Bd. 22, Nr. 12, 1979, Seiten 1510 - 1514 <br> --- | 1,2,6 | |
| A,D | DE-A-2 441 922 (HOECHST AG) <br> * Seite 3, Absatz 3; Ansprüche 1,9; Beispiele * <br> * Seite 4, Absatz 1-2 * <br> --- | 1,3-5 | |
| A | FR-A-2 349 611 (HOECHST AG) <br> * Anspruch 1; Beispiel 1 * <br> --- | 1 | |
| A | CHEMICAL ABSTRACTS, vol. 78, no. 10, 12. März 1973, Columbus, Ohio, US; abstract no. 59832m, IL'INA,E.I. ET AL. 'Reaction of dicyclopentadiene with tall oil aliphatic acids' <br> * Zusammenfassung * <br> & VIS.KHARKIV.POLITEKH.INST. Bd. 60, Nr. 4, 1971, Seiten 86 - 91 <br> & REF.ZH.,KHIM. 1972, 'Abstr. No. 9S980' <br> --- <br> -/-- | 1-3 | |

**RECHERCHIERTE SACHGEBIETE (Int. Cl.5)**

C08G
C09D

Der vorliegende Recherchenbericht wurde für alle Patentansprüche erstellt

| Recherchenort | Abschlußdatum der Recherche | Prüfer |
|---|---|---|
| BERLIN | 11 JUNI 1993 | VOIGTLAENDER R. |

Europäisches
Patentamt

EUROPÄISCHER RECHERCHENBERICHT

Nummer der Anmeldung

EP    93 10 2939
PAGE2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS, vol. 110, no. 26, 26. Juni 1989, Columbus, Ohio, US; abstract no. 233263, 'Preparation of fatty acid modified alkyd...' <br> * Zusammenfassung * <br> & DD-A-258 533 (VEB LACKHARZ ZWICKAU) <br><br> ----- | 1 | |
| | | | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| BERLIN | 11 JUNI 1993 | VOIGTLAENDER R. |